# EUROPÄISCHE PATENTSCHRIFT

(11) **EP 3 260 674 B1**
(45) Veröffentlichungstag und Bekanntmachung des Hinweises auf die Patenterteilung: **30.01.2019**
(21) Anmeldenummer: 16175907.1
(22) Anmeldetag: 23.06.2016
(51) Int. Cl.: F01N 3/20, F01N 9/00, F01N 11/00

(54) **VERFAHREN ZUM ANSTEUERN EINES AKTUATORS IN EINEM KRAFTFAHRZEUG SOWIE SCR-SYSTEM MIT EINEM KORREKTURGLIED ZUR EINFLUSSNAHME AUF DIE ANSTEUERUNG EINES SOLCHEN AKTUATORS**
METHOD FOR CONTROLLING AN ACTUATOR IN A MOTOR VEHICLE, AND SCR-SYSTEM WITH A CORRECTION ELEMENT FOR INFLUENCING THE CONTROL OF SUCH AN ACTUATOR
PROCEDE DE COMMANDE D'UN ACTUATEUR DANS UN VEHICULE AUTOMOBILE ET DISPOSITIF RCS AVEC UN ÉLEMENT DE CORRECTION DESTINE A INFLUENCER LA COMMANDE D'UN TEL ACTUATEUR

(43) Veröffentlichungstag der Anmeldung: 27.12.2017
(73) Patentinhaber: HJS Emission Technology GmbH & Co. KG, 58706 Menden (DE)
(72) Erfinder: KEBEKUS, Udo, 59757 Arnsberg (DE)
(74) Vertreter: Haverkamp, Jens

(56) Entgegenhaltungen:
- WO-A1-2015/191826
- US-A1- 2011 320 132
- US-A1- 2016 069 243

## Beschreibung

Die Erfindung betrifft ein Verfahren zum Ansteuern eines Aktuators in einem Kraftfahrzeug zum Einbringen von Reduktionsmittel in den Abgasstrang eines Kraftfahrzeuges mit einem Verbrennungsmotor als Antriebsaggregat zum Zwecke der Einflussnahme auf den Abgasstrom, wobei von einem fahrzeugseitigen Steuergerät ein für den anzusteuernden Aktuator bestimmtes Ansteuertelegramm in eine das Steuergerät mit dem Aktuator verbindende Datenleitung eingespeist wird, welches Ansteuertelegramm einen Soll-Wert eines Ansteuerparameters in Abhängigkeit von dem Betriebszustand des Antriebsaggregates des Kraftfahrzeuges beinhaltet, wobei der Soll-Wert aus einem Kennfeld und/oder einem von dem zu beeinflussenden Parameter unterschiedlichen Betriebsparameter abgeleitet worden ist. Beschrieben ist des Weiteren ein SCR-System mit einem Korrekturglied zur Einflussannahme auf die Ansteuerung eines Aktuators zum Einbringen von Reduktionsmittel in den Abgasstrang eines Kraftfahrzeuges.

In Kraftfahrzeugen wird auf verschiedene Betriebsmedien durch ein oder mehrere Aktuatoren Einfluss genommen. Als beispielhafte Betriebsmedien seien an dieser Stelle die dem Verbrennungsmotor zuzuführende Luft und der Brennstoff ebenso zu nennen wie das Abgas. Bei modernen Dieselmotoren wird das Abgas zur Optimierung des Verbrauchs je nach Betriebszustand ganz oder teilweise in den Verbrennungsprozess zurückgeführt (Abgasrückführung). Einfluss genommen wird auf den Abgasstrom als Betriebsmedium auch zum Zwecke seiner Reinigung, beispielsweise durch Zuführung eines Reduktionsmittels im Rahmen einer Entstickung. Zur Entstickung von Dieselmotoren werden unter anderem Katalysatoren, etwa SCR-Katalysatoren eingesetzt. Um bei einem SCR-Katalysator die gewünschte selektive NOx-Katalyse durchzuführen zu können, wird als Reduktionsmittel Ammoniak benötigt. Dieses wird zumeist in Form von Urea als Reduktionsmittel-Precursor in den Abgasstrang eingespritzt. Die zuzuführende Reduktionsmittelmenge ist abhängig von der aktuell im Abgasstrom enthaltenen NOx-Menge. Je mehr NOx im Abgas mitgeführt wird, desto mehr Reduktionsmittel wird für die gewünschte Entstickung benötigt.

Die von den Kraftfahrzeugherstellern vermarkteten Fahrzeuge müssen den zum Zeitpunkt ihrer Vermarktung gültigen Abgasnormen genügen. Durch entsprechende Ansteuer- und Überprüfungsalgorithmen ist fahrzeugseitig gewährleistet, dass die einzuhaltenden Normen beim Betrieb des Fahrzeuges eingehalten werden. Zur Beseitigung oder Minimierung von im Abgasstrom mitgeführtem NOx wird die für den aktuellen Betriebszustand benötigte Reduktionsmittelmenge in vielen Fällen aus einem Kennfeld abgeleitet. Aufgebaut worden ist ein solches Kennfeld durch Messungen der im Abgasstrom enthaltenen NOx-Menge in Abhängigkeit von vordefinierten Lastzuständen des Dieselmotors auf einem Prüfstand. Um den Verbrauch an Reduktionsmittel gering zu halten, ist das Kennfeld aufgebaut, damit mit der bei einem bestimmten Lastzustand des Dieselmotors abgeleiteten Reduziermittelmenge eine Entstickung entsprechend der gesetzlichen Vorgabe erfolgt.

Betrieben werden derartige Fahrzeuge für eine Vielzahl von Jahren. Nicht berücksichtigt sind bei einem solchen Verfahren, individuell am Fahrzeug sich einstellende Alterungsprozesse mit dem Ergebnis, dass entweder in einem bestimmten Lastzustand die aus dem Kennfeld abgeleitete NOx-Menge nicht mehr zutreffend ist und/oder dass möglicherweise der SCR-Katalysator während der Lebensdauer des Fahrzeuges nicht oder nicht mehr die genommene Aktivität aufweist. Durchaus kann es vorkommen, dass der ursprünglich im Fahrzeug verbaute SCR-Katalysator beispielsweise durch einen mit einer höheren Aktivität ersetzt worden ist. Auch ist es bei dem vorbeschriebenen Verfahren allein dem Fahrzeughersteller möglich, Einfluss auf eine solche Aktuatoransteuerung zu nehmen, wenn das Verfahren beispielsweise an zwischenzeitlich in Kraft getretene strengere Abgasnormen angepasst werden soll. Typischerweise sind Zugriffe auf fahrzeugseite Steuergeräte Dritten nicht gestattet.

Bei dem vorbekannten Verfahren ist ein Regelkreis gebildet, um die Ausführung der gewünschten Aktuatoraktion zu überprüfen. Im Falle der Ansteuerung einer Reduktionsmitteldosierpumpe, bei der diese durch das Steuergerät als Ansteuerparameter einen bestimmten Wert zum Dosieren einer bestimmten Reduktionsmittelmenge erhält, wird nach Ausführung dieser Aktion von der Reduktionsmitteldosierpumpe ein Bestätigungstelegramm abgesetzt. In diesem wird dem Steuergerät mitgeteilt, welche tatsächliche Reduktionsmittelmenge in den Abgasstrang eingespritzt worden ist. Entspricht die zurückgemeldete Reduktionsmittelmenge einschließlich einer zugelassenen Toleranz nicht der im Ansteuertelegramm gewünschten, wird systemseitig auf eine fehlerhafte Dosierung und möglicherweise eine Beschädigung der Reduktionsmitteldosierpumpe geschlossen. Typischerweise erfolgt zudem auch eine Überprüfung des Entstickungsvorganges. Zu diesem Zweck ist in dem Abgasstrang, typischerweise dem SCR-Katalysator nachgeschaltet, ein Sensor angeordnet, mit dem die verbliebene NOx-Menge und/oder auch ein Ammoniak-Schlupf detektiert werden kann. Auch diese Daten werden an das fahrzeugseitige Steuergerät übermittelt und haben Einfluss auf die nachfolgende Ansteuerung der Reduktionsmitteldosierpumpe.

Ein gattungsgemäßes Verfahren sowie eine gattungsgemäße Vorrichtung sind aus US 2016/0069243 A1 bekannt. Das aus diesem Stand der Technik vorbekannte Verfahren arbeitet vom Prinzip her mit einem Regelkreis, wie dieser bereits vorstehend beschrieben ist. Ein weiteres vorbekanntes Verfahren dieser Art ist aus US 2011/0320132 A1 bekannt.

Ausgehend von diesem Stand der Technik liegt der Erfindung die Aufgabe zugrunde, ein Verfahren zum Ansteuern eines Aktuators zum Einbringen von Reduktionsmittel in den Abgasstrang eines Kraftfahrzeuges mit einem Verbrennungsmotor als Antriebsaggregat vorzuschlagen, mit dem ohne Eingriff in die fahrzeugseitige Steuer- und Regelungsstrategie die diesbezügliche Ansteuerung eines solchen Aktuators beeinflusst werden kann. Der Erfindung liegt ebenfalls die Aufgabe zugrunde, ein SCR-System mit einem Korrekturglied vorzuschlagen, mit dem eine solche Einflussnahme möglich ist.

Gelöst wird die verfahrensbezogene Aufgabe erfindungsgemäß durch ein eingangs genanntes, gattungsgemäßes Verfahren, bei dem in die Datenleitung zwischen dem Steuergerät und dem Aktuator ein Korrekturglied eingeschaltet ist, das die von dem Steuergerät an den Aktuator gesendeten Ansteuertelegramme durchlaufen, durch welches Korrekturglied die einen Soll-Wert eines Ansteuerparameters beinhaltenden Ansteuertelegramme abgefangen werden und der darin enthaltene Soll-Wert mit einem Referenz-Wert verglichen wird, und bei dem bei Feststellen einer Abweichung zwischen dem Soll-Wert und dem Referenz-Wert in einem abgefangenen Ansteuertelegramm der Soll-Wert durch den Referenz-Wert ersetzt wird, bevor das Ansteuertelegramm von dem Korrekturglied an den Aktuator weitergesendet wird.

Die vorrichtungsbezogene Aufgabe wird durch SCR-System mit einem Korrekturglied mit den Merkmalen des Anspruchs 9 gelöst.

Bei dem erfindungsgemäßen Verfahren - Gleiches gilt für das beanspruchte SCR-System mit Korrekturglied - wird das von einem fahrzeugseitigen Steuergerät abgesetzte Ansteuertelegramm zum Ansteuern eines Aktuators abgefangen und es wird geprüft, ob der Soll-Wert eines Ansteuerparameters zu korrigieren ist oder nicht. Als Vergleich zu dem Soll-Wert dient ein Referenz-Wert. Es versteht sich, dass die Basis für den Referenz-Wert sich von derjenigen Basis unterscheidet, aus der der in dem Ansteuertelegramm enthaltene Soll-Wert abgeleitet worden ist. Im Zusammenhang mit einer Entstickung des Abgases kann der Referenz-Wert aus einem aktuell gemessenen NOx-Wert, gemessen beispielsweise unmittelbar stromauf des SCR-Katalysators, abgeleitet sein. Sodann resultiert der Referenz-Wert aus einer aktuell erfassten Zustandsgröße des Betriebsmediums, hier: Abgas, auf welches Einfluss genommen werden soll. Ergänzend oder auch anstelle zu der Bereitstellung eines Referenz-Werts, abgeleitet von einer aktuellen Zustandsgröße, kann auch ein Kennfeld zur Bereitstellung des Referenz-Werts verwendet werden, beispielsweise ein Kennfeld, um strengeren Abgasnormen zu genügen.

Bei Feststellen einer Abweichung zwischen dem Soll-Wert und dem Referenz-Wert wird in dem abgefangenen Ansteuertelegramm der zunächst steuergeräteseitig vorgegebene Soll-Wert durch den Referenz-Wert ersetzt. Dann wird das auf diese Weise korrigierte Ansteuertelegramm an den Aktuator weitergesendet.

Eine Korrektur bzw. Manipulation des Soll-Werts wird man typischerweise nur dann vornehmen, wenn eine Einflussnahme durch den Referenz-Wert auf das Betriebsmedium nicht zu einem nicht zugelassenen Betriebszustand führt. Damit werden fahrzeugherstellerseitig diesbezüglich gemachte Vorgaben nicht unter- oder -überschritten, je nachdem, welches Betriebsmedium beeinflusst werden soll. Im Falle einer Entstickung zur Abgasreinigung wird daher der Soll-Wert durch einen Referenz-Wert nur dann ersetzt, wenn die dadurch bewirkte Entstickung verbessert ist, also die durch den Referenz-Wert vorgeschlagene Reduktionsmitteldosiermenge diejenige des Soll-Werts überschreitet.

In gleicher Weise kann bei einem fahrzeugseitigen Regelungsverfahren, bei dem der angesteuerte Aktuator ein Bestätigungstelegramm über die ausgeführte Aktion absetzt, Sorge dafür getragen werden, dass das Steuergerät das Bestätigungstelegramm mit dem erwarteten Inhalt erhält. In einer Ausgestaltung einer solchen Rückmeldung ist vorgesehen, dass auch die Bestätigungstelegramme von dem Korrekturglied abgefangen werden und dass die darin enthaltenen Daten betreffend die ausgeführte Aktuatoraktorik um die Differenz zwischen dem Soll-Wert und dem Referenz-Wert bereinigt werden. Sodann erhält das Steuergerät ein Bestätigungstelegramm mit der erwarteten Rückmeldungsinformation. Die vorbeschriebene Manipulation bleibt sodann für das Steuergerät unerkannt mit der Folge, dass die fahrzeugseitige Steuer- und Regelungsstrategie unbeeinflusst bleibt. Bei Fehlfunktionen durch den Aktuator, beispielsweise eine nicht bestimmungsgemäße Reduktionsmitteldosierung, bleibt auch bei der vorbeschriebenen Rückmeldungsstrategie dieser Fehler für das Steuergerät erkennbar. Möglich ist es ebenfalls, gegenüber dem Steuergerät den von diesem abgesetzten Soll-Wert in dem Bestätigungstelegramm zu spiegeln.

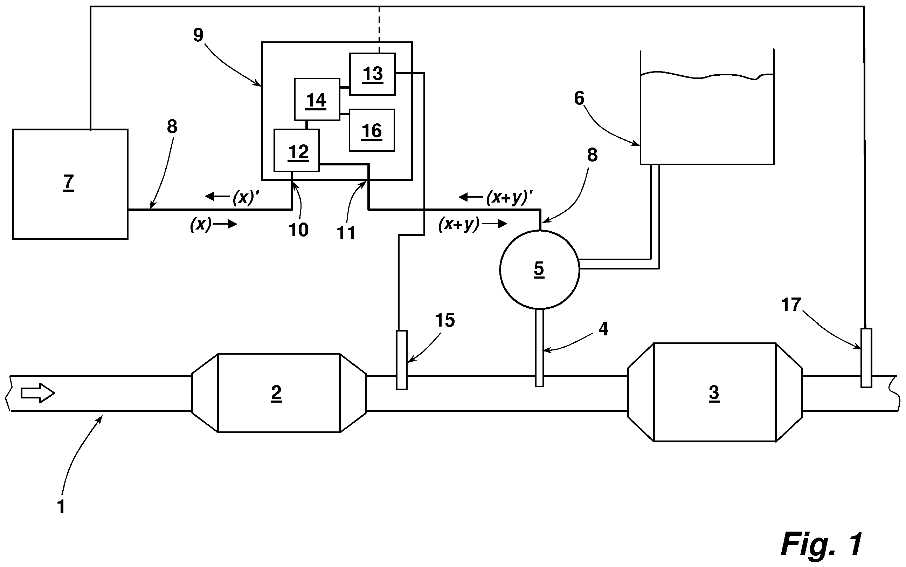

Nachfolgend ist die Erfindung anhand eines Ausführungsbeispiels unter Bezugnahme auf die beigefügte **Figur 1** beschrieben. Figur 1 zeigt nach Art eines Blockschaltdiagrammes einen Teil eines Abgasstranges 1, der in nicht näher dargestellter Art und Weise an den Abgasausgang eines Dieselmotors angeschlossen ist. Das Abgas durchströmt den Abgasstrang in der in Figur 1 mit dem Blockpfeil eingezeichneten Strömungsrichtung. Eingeschaltet ist in den Abgasstrang als erstes Abgasreinigungsaggregat ein Partikelfilter 2. Dem Partikelfilter 2 nachgeschaltet ist in den Abgasstrang 1 als weiteres Abgasreinigungsaggregat ein SCR-Katalysator 3 eingeschaltet. Stromab des Partikelfilters 2 und stromauf des SCR-Katalysators 3 mündet in den Abgasstrang 1 der Ausgang einer Reduktionsmittelzuführleitung 4. Zugeführt wird über die Reduktionsmittelzuführleitung 4 Urea als Reduktionsmittel-Precursor, dessen darin enthaltenes Ammoniak als Reduktionsmittel für eine Entstickung an dem SCR-Katalysator dient. Eingespeist wird das Urea in die Reduktionsmittelzuführleitung 4 mittels einer elektrischen Reduktionsmittelpumpe 5, die das in den Abgasstrang 1 einzuspritzende Reduktionsmittel aus einem Ureatank 6 bezieht. Die Reduktionsmitteldosierpumpe 5 ist über eine Datenleitung als Teil des CAN-Bussystems des Fahrzeuges an ein Steuergerät 7 angeschlossen. Das Steuergerät 7 wertet Daten aus dem Fahrzeugdiagnosesystem zum Zwecke der Ansteuerung und Überwachung der Abgasentstickung aus. Die Datenleitung, über die die Reduktionsmitteldosierpumpe 4 an das Steuergerät 7 angeschlossen ist, ist in der Figur mit dem Bezugszeichen 8 kenntlich gemacht. Bei dem dargestellten Ausführungsbeispiel ist über die Datenleitung 8 eine bidirektionale Kommunikation zwischen Steuergerät und der Reduktionsmitteldosierpumpe 5 möglich.

In die Datenleitung 8 ist ein Korrekturglied 9 eingeschaltet. Die Datenleitung 8 ist durch das Korrekturglied 9 in zwei Datenleitungsäste galvanisch getrennt, sodass eine Datenübermittlung von dem Steuergerät 4 an die Reduktionsmitteldosierpumpe 5 und umgekehrt nur durch das Korrekturglied 9 hindurch erfolgen kann. Der steuergerätseitige Ast der Datenleitung 8 wird über eine Eingangsschnittstelle 10 in das Korrekturglied 9 hineingeleitet. Die Ausgangsschnittstelle ist mit dem Bezugszeichen 11 gekennzeichnet. Zwischen der Eingangsschnittstelle 10 und der Ausgangsschnittstelle 11 befindet sich ein Selektionsglied 12. Das Selektionsglied 12 dient zum Herausfiltern derjenigen Ansteuerdiagramme, die von dem Steuergerät 7 an die Reduktionsmitteldosierpumpe 5 gesendet werden und in denen der Soll-Wert eines Ansteuerparameters, hier: die zu dosierende Urea-Menge, enthalten ist. Alle anderen Ansteuertelegramme werden unmittelbar über die Ausgangsschnittstelle 11 in den nachfolgenden Ast der Datenleitung eingespeist. Teil des Korrekturgliedes 9 ist ein Referenzparameterglied 13, aus dem ein Referenz-Wert abgegriffen werden kann. Diejenigen Ansteuertelegramme, die den Soll-Wert eines Ansteuerparameters der Reduktionsmitteldosierpumpe 5 beinhalten, werden einem Vergleicher 14 zugeführt, in dem ein Vergleich des Soll-Wertes mit einem Referenz-Wert erfolgt. Zu diesem Zweck ist der Vergleicher 14 ebenfalls an das Referenzparameter G13 angeschlossen. Bei dem dargestellten Ausführungsbeispiel ist der Referenz-Wert derjenige Wert für eine Dosierung, der benötigt wird, um die gewünschte Entstickung anhand des aktuell im Abgasstrom mitgeführten NOx bereitzustellen. Zu diesem Zweck ist an das Korrekturglied 9 bzw. sein Referenzparameterglied 13 ein den NOx-Gehalt im Abgasstrom erfassender Sensor 15 angeschlossen.

Wird durch den Vergleich des Soll-Wertes mit dem Referenz-Wert festgestellt, dass die von dem Referenz-Wert vorgeschlagene Dosiermenge höher ist als diejenige des Soll-Wertes, würde bei Zuführen des Soll-Wertes an die Reduktionsmitteldosierpumpe 5 zu wenig Reduktionsmittel eingespritzt werden, um die gewünschte Entstickung vorzunehmen. In einem solchen Fall wird in dem Ansteuertelegramm mit einem Manipulator 16 der darin enthaltene Soll-Wert durch den Referenz-Wert überschrieben. Derartige Ansteuertelegramme haben eine bestimmte und bekannte Bit-Länge. Zudem ist bekannt, an welchen Positionen sich die Information des Soll-Wertes in einem solchem Datentelegramm befindet. Daher kann diese ohne Weiteres ausgelesen und bei Bedarf überschrieben werden. Ist, wie vorstehend beschrieben, der Referenz-Wert höher als der Soll-Wert, begründet durch eine im Abgasstrom tatsächlich mitgeführte höhere NOx-Menge als durch das Kennfeld, auf welches das Steuergerät 7 zum Bestimmen der benötigen Reduktionsmittelmenge zurückgreift, wird nach Ersetzen des Soll-Wertes durch den Referenz-Wert durch ein Manipulationsglied dieses dann korrigierte Ansteuersignal über die Ausgangsschnittstelle 11 der Reduktionsmitteldosierpumpe 5 zugeleitet.

Wenn, wie im vorstehenden Beispiel beschrieben, somit das Steuergerät 7 ein Ansteuertelegramm mit einem Soll-Wert von (x) sendet, wird dieses aufgrund des vorbeschriebenen Konzeptes an die Reduktionsmitteldosierpumpe 5 durch das Korrekturglied 9 mit einem Wert von (x + y) weitergeleitet. (y) ist somit der Wert der Differenz zwischen dem Referenz-Wert und dem steuergeräteseitig vorgesehenen Soll-Wert. Die Reduktionsmitteldosierpumpe 5 dosiert sodann eine dem im Ansteuertelegramm enthaltenen Wert: (x + y) entsprechende Reduktionsmittelmenge.

Ist die Dosierung abgeschlossen, setzt die Reduktionsmitteldosierpumpe 5 ein Bestätigungstelegramm ab. Dieses enthält die tatsächlich dosierte Reduktionsmittelmenge, die sich innerhalb der zugelassenen Toleranzen bei einem fehlerfreien Betrieb von dem Wert (x + y) unterscheiden kann. Teil des Bestätigungstelegrammes ist somit die dosierte Menge mit (x + y)'.

Auch das Bestätigungstelegramm wird von dem Korrekturglied 9 abgefangen. Das Selektionsglied 12 ist auch ausgelegt, solche Telegramme abzufangen, in denen Rückmeldeinformationen von der Reduktionsmitteldosierpumpe 5 an das Steuergerät 7 enthalten sind, und zwar Werte bezüglich der tatsächlich dosierten Reduktionsmittelmenge. Die in dem Ansteuertelegramm festgestellte Differenz zwischen dem Soll-Wert und dem Referenz-Wert ist in einem Differenzwertspeicher abgelegt. Auf diesen wird bei dem auf das Ansteuertelegramm folgende Bestätigungstelegramm zurückgegriffen, damit von dem zurückgemeldeten Dosierwert (x + y)' die im Ansteuertelegramm festgestellte Differenz (y) wieder abgezogen werden kann. Der korrigierte Betätigungswert (x)' wird sodann über die Eingangsschnittstelle 10 an das Steuergerät 7 weitergesendet. Das Steuergerät empfängt das Bestätigungstelegramm mit der Rückmeldung, dass Reduktionsmittel entsprechend dem Wert (x)' dosiert worden ist. Dieser Wert entspricht innerhalb der zugelassenen Toleranzen dem in dem Ansteuertelegramm befindlichen Soll-Wert. Die ursprünglich steuergeräteseitig ausgelöste Dosieraktion wird damit als erfolgreich abgeschlossen verbucht.

Dem SCR-Katalysator 3 nachgeschaltet ist ein weiterer Sensor 17, der an das Steuergerät 7 angeschlossen ist. Der Sensor 17 dient zum Detektieren eines Rest-NOx-Gehaltes und/oder zum Detektieren eines NH₃-Schlupfes.

Durchaus möglich ist eine Einbringung dieser Information auch in das Korrekturglied 9 und darin insbesondere an sein Referenzparameterglied 13, welche Verbindung in Figur 1 gestrichelt gezeigt ist.

In das Korrekturglied 9 können zur Bereitstellung des Referenz-Wertes ebenfalls weitere Daten über den CAN-Bus eingehen, die Einfluss auf die Bestimmung des Referenz-Wertes haben, wie beispielsweise die Abgastemperatur und/oder der aktuelle Abgasmassenstrom.

Die Beschreibung der Erfindung anhand des vorbeschriebenen Ausführungsbeispiels macht deutlich, dass mit einem in eine Datenleitung zwischen einem Steuergerät 7 und einem Aktuator 5 in einem Kraftfahrzeug angeordnetes Korrekturglied 9 Einfluss auf die Ansteuer-Werte bestimmter Ansteuerparameter genommen werden kann, ohne dass hierdurch in irgendeiner Art und Weise in das fahrzeugseitige Diagnosesystem eingegriffen wird. Von besonderem Vorteil ist, dass über das Referenzparameterglied sodann auch Referenz-Werte bereitgestellt werden können, damit die Entstickung auch strengeren Abgasnormen genügen kann, ohne das hierfür in das Fahrzeugdiagnosesystem Eingriff genommen werden muss. Mit Einsatz des beschriebenen Verfahrens und des beschriebenen SCR-Systems kann somit auch eine Aktualisierung eines Kennfeldes sodann auch von dritter Seite vorgenommen werden.

Die Erfindung ist anhand von Ausführungsbeispielen beschrieben worden. Ohne den Umfang der geltenden Ansprüche zu verlassen, ergeben sich für einen Fachmann zahlreiche weitere Ausgestaltungen, die Erfindung umsetzen zu können.

### Bezugszeichenliste

- 1: Abgasstrang
- 2: Partikelfilter
- 3: SCR-Katalysator
- 4: Reduktionsmittelzuführleitung
- 5: Reduktionsmittelpumpe
- 6: Ureatank
- 7: Steuergerät
- 8: Datenleitung
- 9: Korrekturglied
- 10: Eingangsschnittstelle
- 11: Ausgangsschnittstelle
- 12: Selektionsglied
- 13: Referenzparameterglied
- 14: Vergleicher
- 15: Sensor
- 16: Manipulator
- 17: Sensor

## Patentansprüche

1. Verfahren zum Ansteuern eines Aktuators (5) in einem Kraftfahrzeug zum Einbringen von Reduktionsmittel in den Abgasstrang eines Kraftfahrzeuges mit einem Verbrennungsmotor als Antriebsaggregat zum Zwecke der Einflussnahme auf den Abgasstrom, wobei von einem fahrzeugseitigen Steuergerät (7) ein für den anzusteuernden Aktuator (5) bestimmtes Ansteuertelegramm in eine das Steuergerät (7) mit dem Aktuator (5) verbindende Datenleitung (8) eingespeist wird, welches Ansteuertelegramm einen Soll-Wert eines Ansteuerparameters in Abhängigkeit von dem Betriebszustand des Antriebsaggregates des Kraftfahrzeuges beinhaltet, wobei der Soll-Wert aus einem Kennfeld und/oder einem von dem zu beeinflussenden Parameter unterschiedlichen Betriebsparameter abgeleitet worden ist, **dadurch gekennzeichnet, dass** in die Datenleitung (8) zwischen dem Steuergerät (7) und dem Aktuator (5) ein Korrekturglied (9) eingeschaltet ist, das die von dem Steuergerät (7) an den Aktuator (5) gesendeten Ansteuertelegramme durchlaufen, durch welches Korrekturglied (9) die einen Soll-Wert eines Ansteuerparameters beinhaltenden Ansteuertelegramme abgefangen werden und der darin enthaltene Soll-Wert mit einem Referenz-Wert verglichen wird, und dass bei Feststellen einer Abweichung zwischen dem Soll-Wert und dem Referenz-Wert in einem abgefangenen Ansteuertelegramm der Soll-Wert durch den Referenz-Wert ersetzt wird, bevor das Ansteuertelegramm von dem Korrekturglied (9) an den Aktuator weitergesendet wird.

2. Verfahren nach Anspruch 1, **dadurch gekennzeichnet, dass** der Referenz-Wert aus einem Kennfeld abgeleitet wird, welches Kennfeld sich, sollte der Soll-Wert steuergerätseitig einem Kennfeld entnommen worden sein, sich von diesem unterscheidet.

3. Verfahren nach Anspruch 1 oder 2, **dadurch gekennzeichnet, dass** dem Referenz-Wert eine aktuelle Messung des durch den Aktuator (5) zu beeinflussenden Abgasstroms zugrunde liegt.

4. Verfahren nach einem der Ansprüche 1 bis 3, **dadurch gekennzeichnet, dass** der Soll-Wert in dem Ansteuertelegramm nur dann von einem Referenz-Wert ersetzt wird, wenn eine Ansteuerung des Aktuators (5) mit dem Referenz-Wert nicht zu einem nicht zugelassenen Betriebszustand führt.

5. Verfahren nach einem der Ansprüche 1 bis 4, **dadurch gekennzeichnet, dass** als Datenleitung (8) zwischen dem Steuergerät und dem Aktuator Teil des fahrszeugseitigvorhandenen CAN-Bus verwendet wird.

6. Verfahren nach einem der Ansprüche 1 bis 5, **dadurch gekennzeichnet, dass** von dem Aktuator (5) nach Beendigung der durchgeführten Aktorik ein an das Steuergerät (7) gerichtetes Bestätigungstelegramm abgesetzt wird und dass von dem Korrekturglied (9) auch die von dem Aktuator (5) abgesetzten Bestätigungstelegramme, die eine Rückmeldung über die bewirkte Aktuatoraktion beinhalten, abgefangen werden und die in dem Bestätigungstelegramm enthaltene Angabe zur ausgeführten Aktuatoraktorik um die Differenz zwischen dem Referenz-Wert und dem Soll-Wert, um die der Soll-Wert in dem vorausgegangenen Ansteuertelegramm geändert worden ist, korrigiert wird, bevor das Bestätigungstelegramm an das Steuergerät (7) weitergesendet wird.

7. Verfahren nach einem der Ansprüche 1 bis 6, **dadurch gekennzeichnet, dass** das Verfahren Einfluss auf den Abgasstrom eines als Antriebsaggregat in dem Fahrzeug eingesetzten Dieselmotors genommen wird.

8. Verfahren nach Anspruch 7, **dadurch gekennzeichnet, dass** durch das Ansteuertelegramm eine Reduktionsmitteldosierpumpe (5) als Aktuator angesteuert wird, mit der ein Reduktionsmittelstrom stromauf eines SCR-Katalysators (3) in den Abgasstrang (1) eingebracht wird.

9. SCR-System mit einem Korrekturglied zur Einflussnahme auf die Ansteuerung eines Aktuators (5) zum Einbringen von Reduktionsmittel in den Abgasstrang eines Kraftfahrzeuges zum Zwecke der Einflussnahme auf den Abgasstrom, welches Korrekturglied in eine ein einen Soll-Wert eines Ansteuerparameters beinhaltendes Ansteuertelegramm absetzendes Steuergerät (7) mit dem anzusteuernden Aktuator (5) verbindende Datenleitung (8) eingeschaltet und durch die die Datenleitung (8) zwischen dem Steuergerät (7) und dem Aktuator (5) galvanisch getrennt ist, welches Korrekturglied (9) eine Eingangsschnittstelle (10) und eine Ausgangsschnittstelle (11) aufweist, zwischen denen ein Selektionsglied (12) zum Herausfiltern der für den Aktuator (5) bestimmten Ansteuertelegramme, die einen Soll-Wert des Ansteuerparameters beinhalten, ein einen Referenz-Wert bereitstellendes Referenzparameterglied (13), einen Vergleicher (14) zum Vergleichen eines Soll-Werts mit einem Referenz-Wert sowie ein Manipulationsglied zum Ersetzen des Soll-Werts in dem Ansteuertelegramm durch den Referenz-Wert angeordnet sind.

10. SCR-System nach Anspruch 9, **dadurch gekennzeichnet, dass** die einzelnen Glieder des Korrekturglieds (9) oder einige von diesen durch einen von einem Mikroprozessor ausgeführten Algorithmus realisiert sind.

## Claims

1. Method for controlling an actuator (5) in a motor vehicle for introducing reduction agents into the exhaust gas tract of a motor vehicle with a combustion engine as drive unit, for the purpose of influencing the exhaust gas flow, wherein a controlling message, intended for the actuator (5) which is to be controlled, is fed by a vehicle-side control device (7) into a data line (8) connecting the control device (7) to the actuator (5), said controlling message containing a setpoint value of a controlling parameter as a dependency of the operational state of the drive unit of the motor vehicle, wherein the setpoint value is derived from an engine characteristics map and/or from an operational parameter which differs from the parameter which is to be influenced, **characterised in that** a corrector element (9) is integrated into the data line (8) between the control device (7) and the actuator (5), through which the controlling messages run which are sent from the control device (7) to the actuator (5), by which corrector element (9) the controlling messages influencing a setpoint value of a controlling parameter are intercepted, and the setpoint value contained in them is compared with a reference value, and that, if a deviation is determined between the setpoint value and the reference value in an intercepted controlling message, the setpoint value is replaced by the reference value before the controlling message is forwarded from the corrector element (9) to the actuator.

2. Method according to claim 1, **characterised in that** the reference value is derived from an engine characteristics map, which, if it is intended that the setpoint value should be derived from an engine characteristics map, differs from that engine characteristics map.

3. Method according to claim 1 or 2, **characterised in that** an updated measurement of the exhaust gas flow which is to be influenced by the actuator (5) is taken as the basis for the reference value.

4. Method according to any one of claims 1 to 3, **characterised in that** the setpoint value in the controlling message is only replaced by a reference value if a controlling procedure of the actuator (5) with the reference value does not lead to an impermissible operational state.

5. Method according to any one of claims 1 to 4, **characterised in that,** as the data line (8) between the control device and the actuator, use is made of a part of the CAN bus present on the vehicle side.

6. Method according to any one of claims 1 to 5, **characterised in that,** after the ending of the actuation procedure, a confirmation message sent from the actuator (5) to the control device (7) is transmitted, and that the confirmation messages transmitted by the actuator (5), which contain an acknowledgment message regarding the actuator action which has been carried out, are also intercepted by the corrector element (9), and the detail contained in the confirmation message regarding the actuator action which has been carried out, relating to the difference between the reference value and the setpoint value, by the amount of which the setpoint value in the preceding controlling message has been changed, is then corrected before the confirmation message is sent onwards to the control device (7).

7. Method according to any one of claims 1 to 6, **characterised in that** the method is applied to exert influence on the exhaust gas flow of a Diesel engine used as the drive unit in the motor vehicle.

8. Method according to claim 7, **characterised in that** a reduction agent metering pump (5) as an actuator is actuated by the controlling message, with which a reduction agent flow is introduced into the exhaust gas tract (1) upstream of a SCR catalytic converter (3).

9. SCR system with a corrector element for exerting influence on the controlling of an actuator (5) for introducing reduction agents into the exhaust gas tract of a motor vehicle for the purpose of influencing the exhaust gas flow, this corrector element being introduced into a data line (8) connecting a control device (7), which transmits a setpoint value of a controlling message containing a controlling parameter, to the actuator (5) which carries out the controlling procedure, and by means of which the data line (8) is galvanically separated between the control device (7) and the actuator (5), this corrector element (9) comprising an input interface (10) and an output interface (11), arranged between which are: A selection element (12) for filtering out the controlling messages intended for the actuator (5) containing a setpoint value of the controlling parameter; a reference parameter element (13) providing a reference value; a comparator (14) for comparing a threshold value with a reference value; and a manipulation element for replacing the setpoint value in the controlling message by the reference value.

10. SCR system according to claim 9, **characterised in that** the individual elements of the corrector element (9), or some of them, are put into effect by an algorithm which is implemented by a microprocessor.

## Revendications

1. Procédé de commande d'un actuateur (5) dans un véhicule automobile afin d'introduire un agent de réduction dans le système d'échappement d'un véhicule automobile avec un moteur à combustion en tant que groupe d'entraînement, dans le but d'exercer une influence sur le flux des gaz d'échappement, un télégramme de commande destiné à l'actuateur (5) à commander étant injecté par un appareil de commande (7) situé du côté du véhicule, dans une ligne de données (8) qui relie l'appareil de commande (7) à l'actuateur (5), lequel télégramme de commande contient une valeur de consigne d'un paramètre de commande, tributaire de l'état de fonctionnement du groupe d'entraînement du véhicule automobile, laquelle valeur de consigne ayant été déduite d'un diagramme caractéristique et/ou d'un paramètre de fonctionnement différent du paramètre à influencer, **caractérisé en ce qu'**un élément de correction (9), qui parcourt les télégrammes de commande envoyés par l'appareil de commande (7) à l'actuateur (5), est intercalé dans la ligne de données (8), entre l'appareil de commande (7) et l'actuateur (5), lequel élément de correction (9) intercepte les télégrammes de commande contenant une valeur de consigne d'un paramètre de commande et compare la valeur de consigne qu'ils contiennent avec une valeur de référence, et **en ce que**, dès constatation d'un écart entre la valeur de consigne et la valeur de référence dans un télégramme de commande intercepté, la valeur de consigne est remplacée par la valeur de référence avant que le télégramme de commande ne soit retransmis à l'actuateur par l'élément de correction (9).

2. Procédé selon la revendication 1, **caractérisé en ce que** la valeur de référence est déduite d'un diagramme caractéristique, lequel diagramme caractéristique, si la mesure de consigne a été reprise d'un diagramme caractéristique du côté de l'appareil de commande, se différencie de ce dernier.

3. Procédé selon la revendication 1 ou 2, **caractérisé en ce que** la valeur de référence est basée sur une mesure actuelle du flux de gaz d'échappement qui doit être influencé par l'actuateur (5).

4. Procédé selon l'une des revendications 1 à 3, **caractérisé en ce que** la valeur de consigne dans le télégramme de commande est uniquement remplacée par une valeur de référence si une commande de l'actuateur (5) avec une valeur de référence n'entraîne pas un état de fonctionnement non autorisé.

5. Procédé selon l'une des revendications 1 à 4, **caractérisé en ce que** l'on utilise en tant que ligne de données (8) entre l'appareil de commande et l'actuateur, une partie du bus CAN existant du côté du véhicule automobile.

6. Procédé selon l'une des revendications 1 à 5, **caractérisé en ce que** l'actuateur (5) transmet à la fin des actions réalisées, un télégramme de confirmation à l'appareil de commande (7) et **en ce que** l'élément de correction (9) intercepte également les télégrammes de confirmation transmis par l'actuateur (5), qui contiennent un accusé de réception concernant l'action déclenchée par l'actuateur, et que l'indication concernant l'action exécutée par l'actuateur, contenue dans le télégramme de confirmation, est corrigée d'après la différence entre la valeur de référence et la valeur de consigne, par laquelle la valeur de consigne a été modifiée dans le télégramme de commande précédent, avant que le télégramme de confirmation ne soit retransmis à l'appareil de commande (7).

7. Procédé selon l'une des revendications 1 à 6, **caractérisé en ce que** le procédé exerce une influence sur le flux des gaz d'échappement d'un moteur diesel, lequel a été installé dans un véhicule automobile en guise de groupe d'entraînement.

8. Procédé selon la revendication 7, **caractérisé en ce qu'**une pompe (5) de dosage d'agent de réduction faisant office d'actuateur est commandée par le télégramme de commande, avec laquelle un flux d'agent de réduction est introduit à l'amont d'un catalyseur RCS (3) dans le système d'échappement (1).

9. Dispositif RCS avec élément de correction pour exercer une influence sur la commande d'un actuateur (5) afin d'introduire un agent de réduction dans un système d'échappement d'un véhicule automobile afin d'exercer une influence sur le flux des gaz d'échappement, lequel élément de correction est envoyé dans une ligne de données (8) reliant l'appareil de commande (7) émettant un télégramme de commande, contenant une valeur de consigne d'un paramètre de commande, avec l'actuateur (5) à actionner, et par lequel la ligne de données (7) est séparée galvaniquement entre l'appareil de commande (7) et l'actuateur (5), lequel élément de correction (9) présente une interface d'entrée (10) et une interface de sortie (11), entre lesquelles sont disposés un élément de sélection (12), afin d'extraire par filtration les télégrammes de commande destinés à l'actuateur (5), lesquels contiennent une valeur de consigne du paramètre de commande, un élément de paramètre de référence (13) mettant à disposition une valeur de référence, un comparateur (14) pour comparer une valeur de consigne avec une valeur de référence, ainsi qu'un élément de manipulation afin de remplacer la valeur de consigne dans le télégramme de commande par une valeur de référence.

10. Dispositif RCS selon la revendication 9, **caractérisé en ce que** les différentes parties de l'élément de correction (9) ou que certaines d'entre elles, sont réalisées par un algorithme exécuté par un microprocesseur.
